Europäisches Patentamt

(19) European Patent Office                    (11) Publication number: **0 213 661**
**B1**
Office européen des brevets

(12)                    EUROPEAN PATENT SPECIFICATION

(45) Date of publication of the patent specification:          (51) Int. Cl.⁵: **F16L 27/08**
**23.05.90**

(21) Application number: **86201342.2**

(22) Date of filing: **30.07.86**

---

(54) **Seal for a rotatable pipe coupling.**

---

(30) Priority: **09.08.85 NL 8502217**

(43) Date of publication of application:
**11.03.87 Bulletin 87/11**

(45) Publication of the grant of the patent:
**23.05.90 Bulletin 90/21**

(84) Designated Contracting States:
**FR GB IT NL**

(56) References cited:
**FR-A- 1 063 620**
**FR-E- 18 636**
**US-A- 2 542 701**

(73) Proprietor: **SINGLE BUOY MOORINGS INC., 5, Route de Fribourg P.O. Box 124, CH-1723 Marly(CH)**

(72) Inventor: **Franken, Wouter Adriaan Gerardus, Quartier la Valliere, F-06320 La Turbie(FR)**

(74) Representative: **van der Beek, George Frans, Ir. et al, Nederlandsch Octrooibureau Scheveningseweg 82 P.O. Box 29720, NL-2502 LS 's-Gravenhage(NL)**

## Description

The invention relates to a rotatable pipe coupling comprising a pair of relatively rotatable members disposed one within the other with cylindrical faces which lie opposite one another to form a gap, said coupling comprising a radially inner member and a radially outer member, said radially outer member having a radially inwardly open circular groove provided with a sealing ring sealing the gap, said groove having a rectangular cross section with side walls in planes which extend perpendicular to the axis of rotation of the relatively rotatable members.

A rotatable pipe coupling of this type is known from e.g. EP-A 0 013 454. Pipe couplings of this type are used for mooring apparatus and the like. They have large dimensions which means that the sealing rings have a large diameter. They are used for sealing against media under high pressure, such as crude oil or gas, which is to be conveyed through the coupling. Large temperature differences of the order of 200°C may then occur.

The sealing rings of said known pipe couplings form a problem because of the difference in the coefficients of expansion between the material of the seal and the steel surrounding it, the material of the ring is pressed or extruded into the gap to be sealed, this being due to temperature differences but also to differences in pressure. This then gives rise to damage to the ring, followed by leaking of the seal. Wear may also occur as the result of thermal stresses.

The invention seeks to provide a seal in which these problems do not occur.

According to the invention this aim is primarily achieved in that the radially inner member has a radially outwardly opening groove opposite the radially inwardly opening groove of the radially outer member, said outwardly opening groove having side walls extending in the same plane as the side walls of the inwardly opening groove of the radially outer member,
said sealing ring being disposed in said grooves and has a base portion which is rectangular in cross section and is sealingly guided between the radially extending side walls of the groove in the radially inner member, and has radially outwardly extending elastic lips that are disposed at least in part in the groove in the radially outer member and bridge said gap, said lips lying against said radially extending side walls of the groove in the radially outer member, said sealing ring having a radial extent or width which is less than the distance between the juxtaposed end walls of the opposite grooves.

The pipe coupling according to the invention thus has a sealing ring which bridges the gap between the two rotatable members, is sealing with its base portion in the inner groove, is sealing with its elastic lips in the outer groove and is capable to move in its own plane with maintenance of the sealing and without any risk of becoming extruded into the gap. By the structure described it is possible to use strong sealing materials.

The sealing ring may engage the end wall of the inner groove. If the ring expands due to a raise in temperature a clearance then will be formed without changing the sealing function.

The sealing ring may also have from the beginning a radial clearance with respect to the end wall of the inner groove.

Due to the fact that the sealing ring bridges the gap it is even possible that the expanding ring bends undulatingly in the peripheral direction in case it expands under the influence of a temperature difference to a degree such that its circumenference tends to be larger than the largest diameter of the groove. Also then the ring will remain in sealing contact with the side walls of the grooves.

The resilient lips may lie under initial stress against the side surfaces of the groove and it is possible now to use a material which is not or only slightly viscoelastic.

It is observed that e.g. from FR-A 1 063 620 a rotatable coupling is known in which a O-ring made from viscoelastic material, such as rubber, is placed in a groove with clearance on inner and outer side. This ring can be elastically expanded under the influence of overpressure. It does, however, not bridge the gap but is movable parallel to the gap and accordingly can be extruded into the gap under excess pressure.

With the invention it is ensured not only that the shortcoming mentioned above is avoided, but also that the parts which are to be sealed with respect to one another can be made with larger tolerances. This lower precision means a saving of costs.

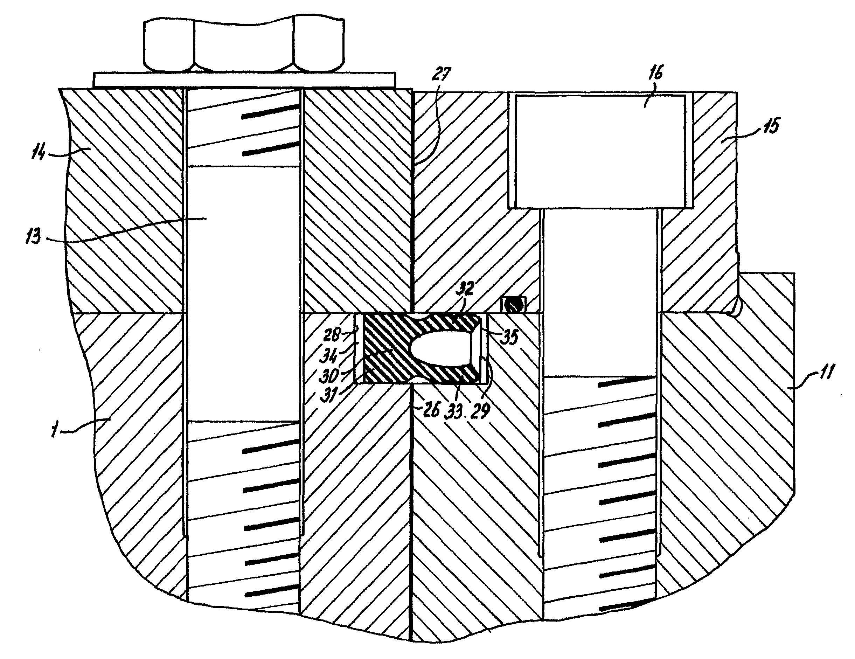

The invention will now be explained more fully with the aid of the drawing, which shows schematically in section a part of a pipe coupling according to the invention.

The coupling shown consists of the stationary part 1 and the rotatable part 11.

On the top of the part 1 a ring 14 is clamped fast by bolts 13, said ring 14 cooperating with a ring 15 which is fastened by means of bolts 16 on the rotatable part 11.

The gap which is to be sealed is situated between the parts 1 and 11 at 26 and between the rings 14 and 15 at 27. The chamber 29, which extends over the gap 26 which is to be sealed, contains a sealing ring 30 which has a rectangular base portion 31 and lips 32 and 33 respectively. This sealing ring is disposed in the chamber 29 with clearance 34 on the inwardly facing side and with clearance 35 between the ends of the lips and the end wall of the chamber.

If the temperature rises, the sealing ring 30 can expand in the radial direction, that is to say in the plane of the ring. This will first of all lead to an enlargement of the diameter, so that the ends of the lips 32 will then come into contact with the surfaces facing them. On further expansion an undulating line will be formed in the peripheral direction, this being permitted by the clearance existing on the inner side of the sealing rings.

The seal according to the invention cannot now be pressed into the gap 26, 27 as the result of thermal expansion, and therefore has a longer life. The parts which are rotatable with respect to one another and which form the gaps 26 and 27 can be made with reduced precision. Small deviations in the width of the gap to be sealed are now of less importance.

The lips 32 can also be disposed in the chamber 29 under initial stress, that is to say the thickness of the unstressed rings in the lip portions before they are fitted in position is greater than that of the shoulder portion.

Whereas in known seals a viscoelastic material was desirable in order to permit good seating of the seal, although this entailed the disadvantage of limited life under high pressure because of the extrusion of the ring into the gap to be sealed, it is now possible to use a material which is not or is only slightly viscoelastic and nevertheless achieve a troublefree seal with a single ring.

The sealing ring may also be clamped without clearance on the inner edge 28 of the groove. If expansion occurs, the clamping stress will then be reduced. In the event of shrinkage, the stress will be increased. However, the contact made between the lips 32 and the side walls will remain practically unchanged.

## Claims

1. A rotatable pipe coupling comprising a pair of relatively rotatable members (1, 14; 11, 15) disposed one within the other with cylindrical faces which lie opposite one another to form a gap (26, 27), said coupling comprising a radially inner member (1, 14) and a radially outer member (11, 15), said radially outer member having a radially inwardly open circular groove (29) provided with a sealing ring (30) sealing the said gap (26, 27), said groove (29) having a rectangular cross section with side walls in planes which extend perpendicular to the axis of rotation of the relatively rotatable members (1, 14; 11, 15), characterized in that the radially inner member (1, 14) has a radially outwardly opening groove opposite the radially inwardly opening groove of the radially outer member (11, 15), said outwardly opening groove having side walls extending in the same plane as the side walls of the inwardly opening groove of the radially outer member (11, 15),
said sealing ring (30) being disposed in both said grooves and having a base portion (31) which is rectangular in cross section and is sealingly guided between the radially extending side walls of the groove in the radially inner member (1, 14), and has radially outwardly extending elastic lips (32, 33) that are disposed at least in part in the groove in the radially outer member (11, 15) and bridge said gap (26, 27), said lips (32, 33) lying against said radially extending side walls of the groove in the radially outer member (11, 15),
said sealing ring (30, 31, 32, 33) being so disposed in the grooves to adapt itself to temperature variations by movement of the sealing ring in its own plane, to which purpose
said sealing ring (30, 31, 32, 33) having a radial extent which is less than the distance between the juxtaposed end walls of the opposite grooves.

2. Pipe coupling as claimed in claim 1 wherein the sealing ring (30, 31, 32, 33) has radial clearance (34) with respect to the end wall (28) of the inner groove.

## Patentansprüche

1. Drehbare Rohrkupplung mit einem Paar von zueinander drehbaren Elementen (1, 14; 11, 15), die ineinander mit zur Bildung eines Spalts (26, 27) einander gegenüberliegenden zylindrischen Endflächen angeordnet sind, wobei diese Kupplung ein radial inneres Element (1, 14) und ein radial äusseres Element (11, 15) umfasst, dieses radial äussere Element eine kreisförmige, radial nach innen offene, mit einem diesen Spalt (26, 27) abdichtenden Dichtungsring (30) versehene Nut (29) aufweist, diese Nut (29) einen rechteckigen Querschnitt aufweist und deren Seitenwandungen in sich rechtwinklig zur Drehachse der zueinander drehbaren Elementen (1, 14; 11, 15) erstreckenden Ebenen liegen, dadurch gekennzeichnet, dass das radial innere Element (1, 14) gegenüber der radial nach innen offenen Nut des radial äusseren Elements (11, 15) eine radial nach aussen offene Nut aufweist, diese radial nach aussen offene Nut Seitenwandungen aufweist, die sich in der gleichen Ebene wie die Seitenwandungen der nach innen offenen Nut des radial äusseren Elements (11, 15) erstrecken, dieser Dichtungsring (30) in den beiden Nuten angeordnet ist und einen Basisteil (31), der einen rechteckigen Querschnitt aufweist und zwischen den sich radial nach aussen erstreckenden Seitenwandungen der im radial inneren Element (1, 14) liegenden Nut abdichtend geführt ist, sowie sich radial nach aussen erstreckende elastische Lippen (32, 33), die zumindest teilweise in der im radial äusseren Element (11, 15) liegenden Nut angeordnet sind und diesen Spalt (26, 27) überbrücken, aufweist, diese Lippen (32, 33) an diesen sich radial erstreckenden Seitenwandungen der im radial äusseren Element (11, 15) liegenden Nut anliegen, und dieser Dichtungsring (30, 31, 32, 33) so in den Nuten angeordnet ist, dass er sich Temperaturänderungen durch eine Bewegung des Dichtungsrings in seiner eigenen Ebene anpasst, wobei der Dichtungsring (30, 31, 32, 33) zu diesem Zweck eine radiale Ausdehnung aufweist, die kleiner ist als der Abstand zwischen den Endwandungen der gegenüberliegenden Nuten in der aneinander angrenzenden Lage.

2. Drehbare Rohrkupplung nach Anspruch 1, bei welcher der Dichtungsring (30, 31, 32, 33) in bezug auf die Endwandung (28) der inneren Nut ein radiales Spiel (34) aufweist.

## Revendications

1. Accouplement tournant pour tubes comportant une paire d'éléments (1, 14; 11, 15) susceptibles de tourner l'un par rapport à l'autre et disposés l'un à l'intérieur de l'autre avec leurs faces terminales cylindriques situées vis-à-vis l'une de l'autre de façon à former une fente (26, 27), cet accouplement comportant un élément radialement intérieur (1, 14) et un élément radialement extérieur (11, 15), cet élément radialement extérieur présentant une gorge circulaire (29) qui s'ouvre radialement vers l'intérieur, munie d'un joint d'étanchéité annulaire (30) qui assure l'étanchéité de cette fente (26, 27), cette gorge (29) présentant une section transversale rectangulaire avec des parois latérales situées dans des plans qui s'étendent perpendiculairement à l'axe de rotation des éléments (1, 14; 11, 15) susceptibles de tourner l'un par rapport à l'autre, caractérisé en ce que l'élément radialement intérieur (1, 14) présente une gorge qui s'ouvre radialement vers l'extérieur, située vis-à-vis de la gorge qui s'ouvre radialement vers l'intérieur de l'élément radialement extérieur (11, 15), cette gorge qui s'ouvre radialement vers l'extérieur présentant des parois latérales qui s'étendent dans le même plan que les parois latérales de la gorge qui s'ouvre radialement vers l'intérieur de l'élément radialement extérieur (11, 15), ce joint d'étanchéité annulaire (30) étant placé dans l'une et l'autre de ces deux gorges et présentant une partie de base (31) de section transversale rectangulaire et qui est guidée de façon étanche entre les parois latérales de la gorge située dans l'élément radialement intérieur (1, 14) et qui s'étend radialement, ainsi que des lèvres élastiques (32, 33) qui s'étendent radialement vers l'extérieur et sont placées au moins en partie dans la gorge située dans l'élément radialement extérieur (11, 15) et qui enjambent cette fente (26, 27), ces lèvres (32, 33) reposant contre ces parois latérales de la gorge située dans l'élément radialement extérieur (1, 15) et qui s'étendent radialement, ce joint d'étanchéité annulaire (30, 31, 32, 33) étant placé dans les gorges de telle façon qu'il s'adapte à des variations des températures par un déplacement du joint d'étanchéité annulaire dans son propre plan, le joint d'étanchéité annulaire (30, 31, 32, 33) présentant à cet effet une extension radiale inférieure à la distance qui sépare les parois terminales des gorges opposées quand celles-ci sont juxtaposées.

2. Accouplement tournant pour tubes selon la revendication 1, dans lequel le joint d'étanchéité annulaire (30, 31, 32, 33) présente un jeu radial (34) par rapport à la paroi terminale (28) de la gorge intérieure.